# EUROPEAN PATENT SPECIFICATION

(11) **EP 0 987 961 B1**
(45) Date of publication and mention of the grant of the patent: **15.09.2004**
(21) Application number: 98928466.6
(22) Date of filing: 12.06.1998
(51) Int. Cl.: A23L 1/304, A23L 1/30, A23K 1/175, A23K 1/16, A23K 1/18

(54) **ZINC AND LINOLEIC ACID CONTAINING FOOD**
ZINC UND LINOLSÄURE ENTHALTENDES NÄHRUNGSMITTEL
ALIMENT CONTENANT DU ZINC ET DE L'ACIDE LINOLEIQUE

(30) Priority: 13.06.1997 GB 9712420
(43) Date of publication of application: 29.03.2000
(73) Proprietor: MARS UK LIMITED, Slough, Berkshire SL1 4JJ (GB)
(72) Inventor: MARSH, Katrina, Anne, Waltham Cter Pet Nutrition, Leicestershire LE14 4RT (GB); WATSON, Timothy, David, George, Renfrewshire PA12 4DY (GB)
(74) Representative: Cornish, Kristina Victoria Joy
(86) International application number: PCT/GB1998/001719
(87) International publication number: WO 1998/056263

(56) References cited:
- EP-A- 0 003 407
- EP-A- 0 037 175
- EP-A- 0 366 869
- US-A- 5 200 218

## Description

The present invention relates to a diet or foodstuff and a dietary supplement comprising zinc at a concentration of above 28 mg/400 kcal and linoleic acid at a concentration of 4 g/400 kcal or above, or zinc at a concentration of 20 mg/400 kcal or above and linoleic acid at a concentration of 6 g/400 kcal or above. The diet/foodstuff and dietary supplement are useful in enhancing and/or improving the skin and coat condition of an animal. The present invention also relates to the use of the diet/foodstuff and dietary supplement in enhancing and/or improving the skin and coat composition of an animal and to processes for the preparation of the diet/foodstuff and dietary supplement.

In most household pets, a healthy skin and coat indicates an animal in general good health. Since skin and coat problems are common in household pets, much research has gone into providing diets which repair deteriorations in skin and coat conditions, thus providing a basic level of healthy skin and coat. Dietary deficiencies in zinc or linoleic acid have been shown to produce deteriorations in skin and coat conditions in dogs and cats (Miller W.H., Veterinary Clinics of North America; Small Animal Practice, Vol. 19, No. 3, May 1989, 497-511; Campbell K.L., Veterinary Dermatology, Vol. 4, No. 4, 167-173, 1993; Lloyd D.H., Journal of Small Animal Practice (1989) 30, 207-212). Such deteriorations are reversed when the animal is fed a complete and balanced food (including a high quality commercial food). Levels of nutrients in pet foods are well documented as to the provision of a complete and balanced food for healthy animals. Variations on individual ingredients are usually kept within well defined limits. Concentrations of individual ingredients far in excess of these limits may cause detrimental/toxic effects. In fact, European Community legislation currently prevents the sale of dog foods containing greater than 28 mg/400 kcal of zinc. Furthermore it is reported in Muller and Kirk's Small Animal Dermatology, 5^{th} Edition, W.B. Saunders Company, 1995, that pets that are fed high-quality commercial foods typically receive no benefits from additional supplements.

The supplementation of zinc and linoleic acid to dogs in the form of soft cookies is described in US-A-5 200 218.

As the skin and coat condition of a pet provides such an important visual impact (in particular to pet owners and/or to the public in general) it is, and has been, of considerable interest to be able to deliver visible enhancements on animals with already good (healthy) skin and coat condition. This has previously not been within the control of pet owners. Furthermore, humans are constantly trying to improve skin and hair conditions.

Accordingly, the present invention provides, according to a first aspect, a diet or foodstuff, comprising zinc at a concentration of above 28 mg/400 kcal and linoleic acid at a concentration of at least 4 g/400 kcal (4 g/400 kcal or above), or zinc at a concentration of 20 mg/400 kcal or above and linoleic acid at a concentration of 6 g/400 kcal or above. Throughout this text, references to concentrations per kcal are to kcal total metabolisable energy intake. A diet/foodstuff according to the first aspect has been shown to be effective in producing superior skin and coat condition in animals. Without being limited to the particular mode of action of the invention, it is believed to be effective as follows: Zinc is a part of a number of enzyme systems involved in skin and hair growth; linoleic acid is an essential nutrient for maintenance of the skin's barrier function and the precursor of arachidonic acid, which regulates the turnover of skin cells. Super-supplementation of a food with a combination of higher than normal levels zinc and linoleic acid provides a) a glossier coat or glossier hair, b) reduced skin scales (dander), and c) improved skin barrier function. The role of the zinc may be associated with the adherence of skin scales and hair scales to each other, while the role of the linoleic acid is thought to be associated with the physical gloss of the hair.

The present invention relates, for all aspects, to any animal, in particular those with substantial hair on the surface of the skin which forms a coat. The invention relates, in particular, to humans, horses, cats and most preferably to dogs.

The invention provides a dramatic improvement when the high levels of zinc and linoleic acid are used in combination. Such an improvement indicates a degree of synergism between the zinc and linoleic acid. It has been suggested that zinc may augment the metabolism and digestion of polyunsaturated fatty acid (but there has been no scientific evidence to support this theory).

The first aspect of the invention is preferably used in combination with a complete and balanced food (for example, as described in National Research Council, 1985, Nutritional Requirements for Dogs, National Academy Press, Washington D.C. or Association of American Feed Control Officials, Official Publication 1996). A complete and balanced diet includes a high quality commercial food. A high quality commercial food can be defined as a diet manufactured to the nutrient recommendations of the National Research Council, 1985 (*supra)*, wherein the digestibility of key nutrients is 80% or more.

The first aspect of the invention applies preferentially to a non-human animal diet or foodstuff which is a wet or dry composition (food). Wet food usually describes food which is sold in tins and has a moisture content of 70 to 90%. Dry food usually describes food which is of a similar composition, but with 5 to 15% moisture and therefore is presented as small biscuit-like kibbles. The diet or foodstuff can be made according to any method known in the art, such as in Waltham Book of Dog and Cat Nutrition, Ed. ATB Edney, Chapter by A. Rainbird, entitled "A Balanced Diet" in pages 57 to 74, Pergamon Press Oxford. The concentrations of zinc and linoleic acid to be added to the diet/foodstuff are calculated on the basis of the energy content of the diet/foodstuff and of any additional nutrients which may be consumed by the animal. Preferably, a complete and balanced food, (including a high quality commercial food) comprises the diet/foodstuff according to the invention.

The zinc and/or linoleic acid may be added at any time during the manufacture/processing of the diet/foodstuff, including at the end, as the last step before packaging.

The concentration of zinc and the concentration of linoleic according to the invention, represent the lower limits of these ingredients. Preferred features of the invention are when one or both of the zinc and linoleic acid concentrations are raised and/or when one or both of the active constituents of marine fish oils are also present.

Preferred raised concentrations of zinc and linoleic acid are as follows:
(a) When the concentration of zinc is above 28 mg/400 kcal and the concentration of linoleic acid is 4 g/400 kcal or above:
   Zinc: 35 mg/400 kcal or above, or 40 mg/400 kcal or above.
   Linoleic acid: 5 g/400 kcal or above, or 6 g/400 kcal or above.
(b) When the concentration of zinc is 20 mg/400 kcal or above and the concentration of linoleic acid is 6 g/400 kcal or above:
   Zinc: 25 mg/400 kcal or above, or 30 mg/400 kcal or above, or 35 mg/400 kcal or above, or 40 mg/400 kcal or above.
   Linoleic acid: 7 g/400 kcal or above, or 8 g/400 kcal or above.

These preferred concentrations can be used in any combination, i.e. for (a) above: any concentration of zinc (from above 28 mg/400 kcal) can be used with any concentration of linoleic acid (from 4 g/400 kcal or above), for (b) above: any concentration of zinc (from 20 mg/400 kcal or above) can be used with any concentration of linoleic acid (from 6 g/400 kcal or above).

Upper limits of the zinc and linoleic acid concentrations are not restrictive. However, preferred upper limits are: 100 mg/400 kcal for zinc and 8 or 9 g/400 kcal for linoleic acid.

The active constituents of marine fish oils are eicosapentaenoic acid (EPA) and docosahexanoic acid (DHA). Further advantageous effects of the present invention are noted when one or both of EPA and DHA are present, (preferably both). Inclusion of these constituents in the present invention will further provide for improved skin and coat/hair condition in animals. Pruritus (scratch-itch) is also reduced in non-human animals. Preferred levels of EPA are 250-500 mg/400 kcal, more preferably 300-400 mg/400 kcal. Preferred levels of DHA are 175-400 mg/400 kcal, more preferably 200-300 mg/400 kcal. The preferred concentrations can be used in any combination, i.e. any concentration of EPA can be used in combination with any concentration of DHA. Furthermore, any combination of EPA and DHA can be used in any combination with any concentration of zinc and/or linoleic acid according to the invention.

It has never previously been proposed to incorporate EPA and/or DHA into animal foods for any advantageous effect, particularly at the preferred levels of concentration according to the invention. The basis for this is the possible incorporation of EPA and/or DHA into platelet cell membranes and associated risk of reduced platelet function (blood clotting ability) in animals. The present invention has demonstrated that this is not the case. Evidence based on measurements of prothombin and partial thromboplastin times have shown that blood clotting is not impaired.

In addition to the above, it has been determined, surprisingly, that inclusion of EPA and/or DHA, particularly at the preferred levels according to the invention does not result in product malodour, animal halitosis or coat malodour. This is surprising because EPA and DHA are the active constituents of marine fish oils and a fishy smell usually results from their use. Since EPA and DHA have anti-inflammatory potential, their inclusion, from a marine fish oil source can be, from a nutritional point of view, extremely advantageous and the perceived risk of pancreatitis, based on the evidence of consumption of high fat diets, does not apply when the total fat consumption of a diet is not increased, as per the present invention.

Of course, the source of EPA and/or DHA for inclusion in the present invention is not limiting. Marine fish oil typically contains 18% EPA and 12% DHA and is the preferred source for these fatty acids.

The source of zinc or of linoleic acid is not limiting. Preferred zinc sources include zinc sulphate, zinc oxide, organic zinc complexes or a combination of two or more thereof.

Preferred linoleic acid sources include safflower oil, sunflower oil, soyabean oil, other plant, or animal oils/fats or a combination of two or more thereof. Since zinc and linoleic acid are ubiquitous in food, it will usually be necessary to determine the concentration of each which is present in the ingredients of the diet/foodstuff and then add sufficient quantities to bring the total concentration of each up to the required levels, according to the invention.

According to a second aspect of the invention there is provided a dietary supplement which, in addition to other nutrient intake, supplies a total zinc concentration of above 28 mg/400 kcal and a total linoleic acid concentration of 4 g/400 kcal or above, or zinc at a concentration of 20 mg/400 kcal or above and linoleic acid at a concentration of 6 g/400 kcal or above. This aspect of the invention is particularly useful to supplement a diet/foodstuff, which does not contain sufficiently high levels of zinc/linoleic acid (according to the invention). The concentrations of zinc/linoleic acid in the diet/foodstuff can easily be determined by typical or guaranteed analysis declared by the manufacturer either on the label or in supplementary material or by nutritional analysis of the diet and the required amount of supplement can be added to the animal's diet. This can be done by including a quantity of the supplement with the animal's diet or by additionally feeding a quantity of the supplement to the animal. The supplement can be formed as a foodstuff with extremely high levels of zinc/linoleic acid which requires "dilution" before feeding to an animal. The supplement may be in any form, including solid (e.g. a powder), semi-solid (e.g. a food like consistency/gel) or a liquid. The liquid form can conveniently be mixed in with food or fed directly to the animal, for example via a spoon or via a pipette-like device. The supplement can be high in both linoleic acid and zinc or can be a combined pack of at least two components, having the required concentration of zinc and linoleic acid separately (either diluted or any level of concentration).

All features of the first aspect of the invention, as described above, also apply to the second aspect of the invention (raised levels, other constituents etc.).

A further aspect of the invention provides a composition for topical administration to animals comprising zinc and linoleic acid at high levels (according to the first and second aspects of the invention).

The composition can be applied from one source or from more than one. For example, a combined pack having a source of zinc and a source of linoleic acid.

The topical composition is applied in the usual manner to the animal's coat or hair. The composition is most suitably in liquid or in powder form.

Any of the first to third aspects of the invention may provide simultaneous, separate or sequential provision of the required levels of zinc and linoleic acid.

The present invention also provides, according to a fourth aspect, a diet or foodstuff as set out for all features of the first aspect, a dietary supplement as set out for all features of the second aspect, and a composition as set out for all features of the third aspect, for use in enhancing and/or improving the skin and coat condition of an animal.

A fifth aspect of the invention also provides for the use of all features of the first, second and third aspects of the invention for enhancing and/or improving the skin and coat condition of an animal. This aspect of the invention correlates with a method for enhancing and/or improving the skin and coat condition of an animal by administration of any feature of the first to third aspects of the invention.

The invention is cosmetic in that it produces its effect in normal/healthy animals with good skin and coat condition, as well as those with dry scaly skin. The invention does not relate to the correction of real or marginal deficiencies, rather, it provides performance enhancement for healthy animals and can do so via a complete and balanced diet. It delivers visible enhancement on animals with already good skin and coat hair condition.

Improvements in skin and coat conditions according to the invention may also be associated with improved skin barrier function by the reduction of transepidermal water loss.

Improvements in skin and coat condition, according to the invention, may be determined by a quantitative descriptive analysis panel. This panel involves a specialist group of people to assess a number of characteristics of the animals being tested. This form of analysis is currently used in the cosmetics and health-care products in industry evaluation of and is described as follows:

### The Quantitative Descriptive Analysis Panel

The following document identifies the methodology used to set up the Quantitative Descriptive Analysis (QDA) panel. It includes a description of the recruitment, training, validation and every day running of the panel.

### 1. The History

During 1994 and 1995, when the first skin and coat projects were getting underway, a panel of 15 associates were used to assess the condition of the cats' and dogs' coats in an attempt to provide a benchmark against how well products were feedings. The panel proved to be highly variable and lacked consistency. Some individuals showed biases. Data points were also frequently missing, due to individuals being unable to attend assessment sessions, as a result of prior engagements. Analysis of this poor quality data was difficult and never showed any statistical differences because of the noisy data.

A specialist panel of people was therefore required to assess the cats and dogs, and a consistent method of assessment needed to be adopted.

### 2. The Recruitment

It was essential to identify individuals who were interested in their task, and that were motivated to carry out a thorough assignment for the duration of the trial. For any animal assessments it is essential that potential recruits should:
i) be comfortable with handling animals, although they do not have to be animal owners themselves,
ii) not suffer from any allergies which may affect their ability to carry out the assessments,
iii) not suffer from abnormal colour vision - there are tests available to monitor for colour blindness and discrimination of colour,
iv) have normal eyesight (with correction if necessary) and, if glasses are worn for close work, they should be worn for the assessments,
v) be able to devote time to the assessments for the duration of the trial,
vi) although not essential, it is useful if the group selected cover a broad age range; including both sexes can have advantages in forming a balanced group,
vii) be identified as having good senses,
viii) skills to observe for, during recruitment include teamwork, decision making and judgement, commitment and inter-personal effectiveness; these skills are essential if the panel are to succeed.

N.B. If the assessors are animal owners, then care should be taken to ensure, that if a trial animal has the same visual appearance (e.g. colour or breed), there is no bias in terms of favourable scoring.

### 3. Assessor Training

A small, well-trained panel is much better than a large untrained panel. For a dog study 20 potential candidates are selected, who demonstrated the necessary skills (listed above - section viii) at interview. These 20 people then began a training course, lasting approximately 12 hours over 3 days. During the first day the panel were introduced to the principles of assessment with 5 reference cats. The assessors were then asked to assess 8 cats, of differing colours and coat types, two of which were the same cat (we pretended they were sisters!).

This test monitors the consistency of individuals, looks at their ability to use the scale properly and can be used to compare their score against the panel mean to eliminate any biases. They were also asked to smell 3 dogs and rank them in order of offensiveness. This gave us an indication of how well the assessors handled the dogs and cats and an indication of their sensory skills. The best 10 assessors were selected to complete the next training session.

Day two involved assessing the same 8 cats, to see how repeatable the assessors were. They also completed a more complex odour recognition test and odour ranking test, to identify how sensitive their noses were! The best 5 assessors were then recruited onto the panel.

Day 3 involved more open discussions around the parameters to be assessed. This encouraged the group to get to know each other and learn to work together, as a team. Some time was also spent evaluating the Reference animals, a group of animals (preferably fed the same diet) which represent extremes of the scale in terms of coat condition.

These Reference animals are also assessed at the beginning of each assessment for half an hour. This provides the forum for a discussion to ensure they are all in agreement. A panel leader must run this discussion, to ensure that the quieter assessors give their views and do not just agree with the more dominant ones.

### 4. Presentation of animals

◆ The animal should be assessed in a random order, at each assessment stage, to eliminate any bias towards the first or last animals presented.
◆ Between each assessment the assessors should wipe their hands with an alcohol tissue or wash them with soap and water.
◆ Each animal should be examined by the assessors as a group but, to avoid any effect of change sin coat texture during handling, the assessors should touch each animal in the same sequence.
◆ Each animal should only be identified by an unmemorable number, not by name. This prevents any subconscious favouritism and prevents recall of previous scores.
◆ Each animal should be assessed under identical conditions, preferably indoors, to provide an even and consistently lit area.
◆ Prior to evaluation, the coat should be combed evenly all over, in a standardised manner, to eliminate the influence of any disturbances in the way the coat is lying. A clean comb should be used for each animal. Combs should be de-greased in alcohol or methylated spirits.

### 5. Assessment Considerations

◆ The sensory evaluation techniques rely upon a critical judgement made on each occasion. The assessors must understand that they are making an independent evaluation of an animal on a specific occasion. The assessors must be blind to all treatment groups that the animals may belong to. There is no harm however in giving some information about the trial e.g. something has been added to the diets of some of the animals to see if it has any effects on any aspects of the animals' coat condition. They may help to keep their interest levels high and make them feel they are doing a worthwhile job.
◆ The scoring system to be used should comprise a numerical scale for each parameter under evaluation. The scale is a simple category scale with a minimum of 5 categories for the purpose of statistical analysis. The scale currently used by the QDA panel appears to be a line scale, but is in fact used as a category scale i.e. crosses are only marked on the whole and half numbers and not anywhere along the line.

### 6. Assessment Parameters

1. Gloss - this should be evaluated before touching the animal, so that the texture of the coat does not influence the assessor. The coat should be examined for the extent of light reflected from the coat. The darker coloured coats will naturally reflect more light tan the lighter coats, but the mixed coloured coats e.g. a brindle dog, tortoiseshell cat or roan horse can cause confusion and variability. These should be excluded from the trial if possible and ideally use one colour of animal only. If this is not possible, the panel should simply judge the gloss reflected from the different coloured areas and give an average score.
2. Softness - if possible the assessors should not just stroke the coats, but also get their fingers into the coat so that the true feel of the coat is detectable. In the case of horses this may not be possible if they are clipped, but in conjunction with an assessment of the softness of the mane and/or tail a better picture may be given. This highlights the importance of ensuring the grooming practises for each animal ids identical, and if one is clipped they should all be clipped.
3. Grease/Dryness - this parameter can be assessed at the same time as softness. Very often a greasy or dry feel are confused, hence the QDA panel now assess grease and dryness against an optimum feel.
4. Scale - the animal's body needs to be visually sectioned off into six areas. Assessments should be carried out, section by section, lifting the hairs in the opposite direction of growth, examining the skin and base of the hairs for signs of flaking. N.B. lighter coats may need very careful inspection. The scores, for each section, are then summed for the whole body and translated onto the scoring line. By dividing the body into six, the most accurately scored parameter has been created.
5. Erythema - an especially important parameter to assess when testing topical products to ensure no irritation occurs.

A sixth aspect of the invention provides a process for the preparation of any of the first, second or third aspects of the invention. The process comprises mixing together the ingredients, optionally heating to cook any raw food ingredients and presenting the mixture in a form suitable for consumption or administration to an animal.

As previously discussed, the zinc and linoleic acid (all or some of the required total) can be introduced into the mixture at any stage. Preferably the diet or foodstuff is a wet or dry product. Preferably, the supplement and/or composition is a powder or liquid.

The present invention is described with reference to the drawings relating to Example 1, of which:
FIGURE 1 is a graph showing improvements in coat gloss.
FIGURE 2 is a graph showing improvements in coat scale.
FIGURE 3 is a graph showing the reduction in transepidermal water loss and improvements in skin barrier function.

The invention will now be described with reference to the following non-limiting examples:

### Example 1

### Summary

- This trial evaluated linoleic acid and zinc as nutritional drivers of superior skin and coat condition.
- 32 Labrador Retriever dogs were initially fed a complete balanced diet (see below) for nine weeks. Labaradors were used as they are a breed with relatively constant coat colour thereby avoiding any differences in gloss which could be attributed to differences in coat colour. The following nine weeks they were divided into four groups offered either the complete balanced diet alone or supplemented with linoleic acid, zinc or a combination of the two.
- Levels of linoleic acid and zinc in the control and test diets were 1.8 or 6 g/400 kcal and 12.5 and 40 mg/400 kcal, respectively.
- The parameters evaluated included the visual assessment of coat quality by trained assessors and transepidermal water loss.
- No significant differences were detected between diets in coat softness or optimum coat feel.
- A significant increase (p=0.05) in coat gloss was observed in the group supplemented with the combination of zinc plus linoleic acid compared to the control group.
- Supplementation with zinc plus linoleic acid was also associated with a substantial and significant (p=0.0002) improvement in skin scale.
- There was a significant decrease (p=0.05) in the transepidermal water loss of the dogs skin in the groups supplemented with either zinc or linoleic acid plus zinc which was not seen in the control group.
- These data clearly demonstrate that increased dietary zinc and linoleic acid intakes are associated with significant and substantial improvements in skin and coat condition and skin barrier function.

| Composition of Complete Balanced Diet | |
|---|---|
| Ingredient | Inclusion |
| Rice | 24.9% |
| Whole corn | 18.8% |
| Whole grain wheat | 12.2% |
| Chicken by-product meal | 18.7% |
| Corn gluten meal | 9.5% |
| Brewers yeast | 1.7% |
| Dried egg | 0.8% |
| Non-iodinised salt | 0.7% |
| Vitamin premix | 3.4% |
| Sunflower oil | 0.5% |
| Beef tallow | 4.9% |
| Poultry viscera | 4.4% |

Analytical profile - moisture 8.2%, protein 26.4%, fat 10.4%, ash 7.1%, fibre 2.2%.

### Methods

### 1. Trial Set-up

### a) Animals, Location and Feeding.

The trial was conducted in Dog Care 6 at WCPN utilising 32 adult Labradors (31 black, 1 yellow) which were divided into four panels (yellow dog placed in control group), matched for age, gender and coat condition. The dogs were fed to maintain their bodyweight and therefore bodyweights were monitored weekly. Amounts offered were adjusted to compensate for any excessive gain or loss of bodyweight.

### b) Trial Design.

All four panels of dogs were offered the standard complete balanced diet so that all panels were standardised with respect to skin and coat condition. Immediately following this prefeed each panel of dogs was fed with either the standard complete balanced diet or one of the supplemented test diets, for an additional nine weeks, as outlined in Table 1.

**Table 1.**

| **Trial Design of Phase I** | | | | | |
|---|---|---|---|---|---|
| Test Weeks | Period | Panel 1 | Panel 2 | Panel 3 | Panel 4 |
| 0-9 | Prefeed | Standard Diet | Standard Diet | Standard Diet | Standard Diet |
| 10-18 | Phase I | Standard Diet | Standard diet + linoleic acid | Standard Diet + zinc | Standard Diet + linoleic acid + zinc |

### c) Foods

A single batch of complete balanced diet was made up. Analysis of the diet revealed a zinc level of 12.5mg/400 kcal as specified. Zinc supplementation was added at the time of feeding in the form of zinc sulphate.

Linoleic acid was added directly to the diet at the time of feeding in the form of safflower oil (78% linoleic acid). The two groups of dogs receiving the safflower oil supplement had their food intakes adjusted to compensate for the increased energy intake from the oil.

The final levels of zinc and linoleic acid presented to the animals are indicated in Table 2 as measured by the techniques described in Appendix III. Essential fatty acid/linoleic acid levels were determined using gas liquid chromentography. Zinc levels were quantified by atomic absorption spectrophotometry. Both methods are approved by the National Accreditation of Measurement and sampling which is governed by the UK Accreditation Service.

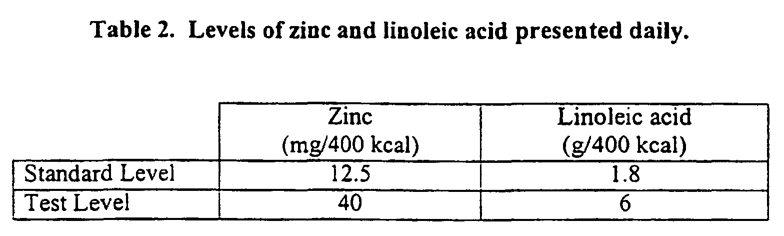

### d) Grooming.

As grooming has a major impact on coat condition, a regular pattern of grooming was followed throughout the trial. All dogs were uniformly groomed once weekly and bathed with shampoo three weeks before the end of the prefeed.

### 2. Parameters Measured

### a) Daily intake

The energy requirement of each animal was calculated at the beginning of each feeding stage and the amount offered was adjusted accordingly. Individual food intakes were recorded daily for each dog. Individual weekly bodyweights were measured to monitor and correct any over- or under-feeding.

### b) Sensory Evaluation of Coat Condition.

The Quantitative Descriptive Analysis (QDA) panel was composed of five women who have been selected and trained, in house, to provide accurate and precise assessments of coat quality (for details refer to QDA described earlier).
- Coat gloss was measured before any manual examination of the animal was carried out. Gloss was assessed by scoring the amount of light reflected from the coat.
- Coat softness is a measure of the feel of the coat when the assessors run fingers through the full thickness of the coat.
- Optimum coat feel is an absence of either a greasy or a dry feel of the coat (as often the two are indistinguishable on the basis of feel alone) and was measured at the same time as the softness. This parameter is subdivided into two measurements; along the top of the back and along the flanks, as there is variability between these areas.
- Scale (dander) on the animals coat was an undesirable quality and is measured by visually assessing the amount of scale present in three different sections of the dogs' coat.

Each of the five parameters was assessed in each dog twice at the end of the prefeed (week 8 and week 9) and twice at the end of the test phase (week 17 and week 18).

### c) Transepidermal Water Loss

Skin hydration was evaluated by measuring the conductivity of the skin using a dermal phase meter which yields a direct measure of the hydration of the stratum corneum. Continuous measurements taken over a 30 second period provide an indirect measure of transepidermal water loss. Measurements were taken in duplicate at the end of the prefeed stage (weeks 8 and 9) and at the end of the test phase (weeks 17 and 18) from the inner surface of both left and right ears. These provide a direct assessment of skin barrier function.

### 3. Data Analysis and Presentation.

All results are presented as the change in parameters from the end of the prefeed (mean of weeks 8 and 9) to the end of the test phase (mean of weeks 17 and 18). Statistical differences between the changes observed in each panel were assessed by one-way anyalysis of variance (ANOVA). Statistical significance was reached when p is equal to or less than 0.05).

### Results

No significant changes in either coat softness or optimum coat feel of the dogs were detected in this study following the addition of zinc, linoleic acid or a combination of the both in the diet, when compared to the control diet.

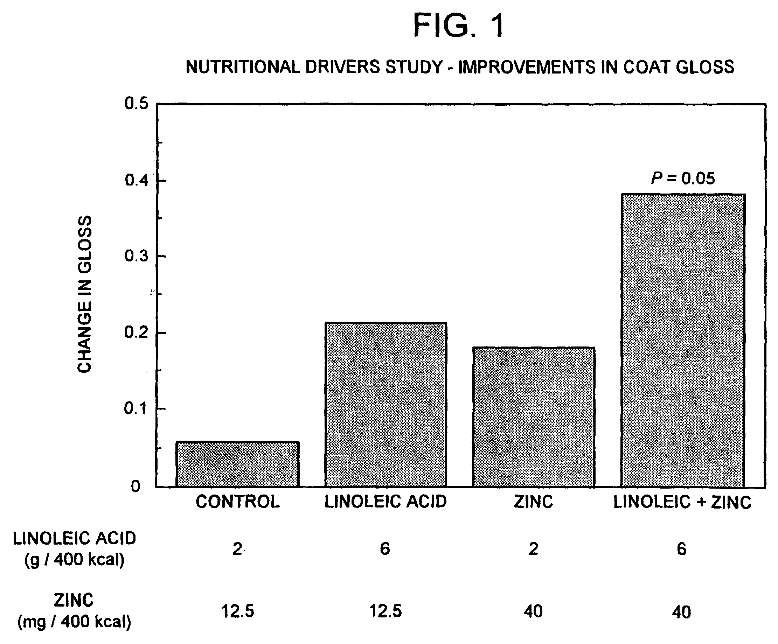

Statistical analysis compared the changes in coat gloss, from the end of the prefeed to the end of the test phase, between each of the different diets by one-way ANOVA. All three test panels showed an increase in coat gloss compared to the control group (Figure 1). The increases observed in the zinc group and the zinc plus linoleic acid group appeared to be additive when both supplements were delivered in combination, such that the dogs supplemented with the combination demonstrated a large (0.4 units on a 1 to 5 scale) and significant (p=0.05) increase in coat gloss (when compared to control group).

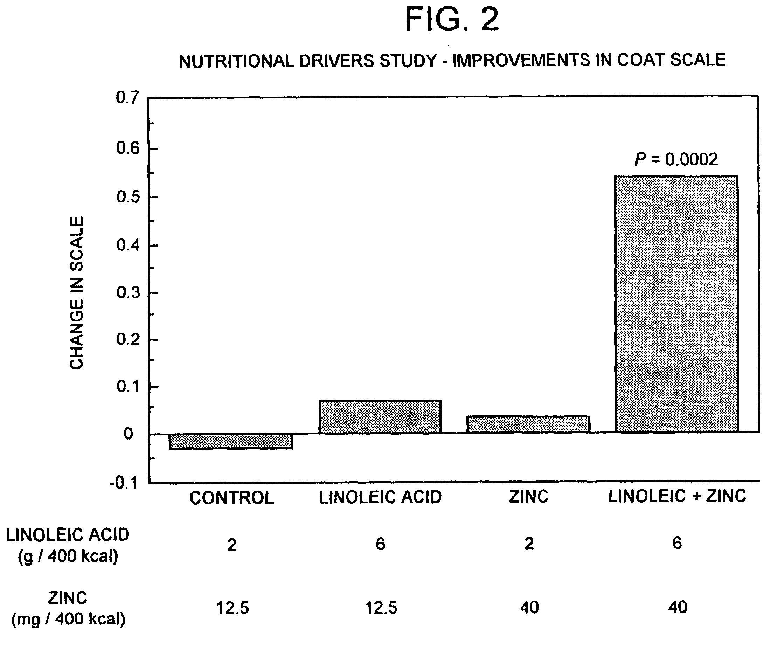

Changes in coat scale from the beginning to the end of the test phase was also analysed using one-way ANOVA to compare differences between diets. Note that a positive value represents a reduction in the amount of scale in the coat. Dogs supplemented with zinc or linoleic acid alone and those in the control group showed no reduction in the amount of scale present over the test period (Figure 2). The group of dogs supplemented with the combination of zinc plus linoleic acid demonstrated a substantial (0.53 units) and significant (p=0.0002) improvement in coat scale (when compared to control group) representing a synergistic rather than additive effect.

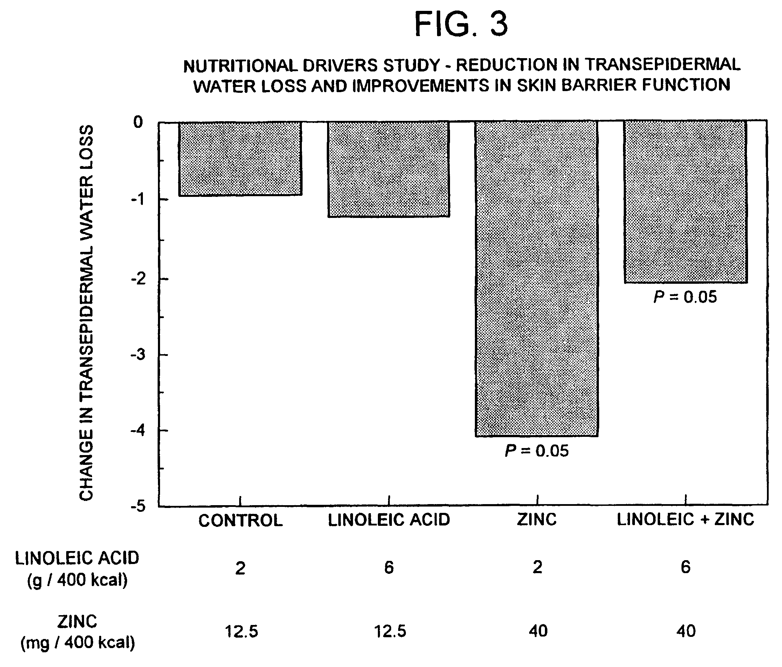

During the test phase, dogs in the control group and those supplemented with linoleic acid aione showed no significant change in trans-epidermal water loss (TEWL; Figure 3). However, there was a trend for zinc to reduce TEWL over the test period. Supplementation with zinc was associated with a large, significant (p=0.05) decrease in TEWL over the test period. Supplementation with the combination of linoleic acid plus zinc also showed a moderate but significant (p=0.05) decrease in TEWL at the end of the test phase compared to the TEWL at the start of the test phase.

The results from all parameters are summarised in Table 3.

**Table 3.**

| **Summary of results.** | | | |
|---|---|---|---|
| **Parameter** | Linoleic Acid | Zinc | Linoleic + Zinc |
| Gloss | ↔ | ↔ | ↑ |
| Softness | ↔ | ↔ | ↔ |
| Scale | ↔ | ↔ | ↓ |
| Optimum Coat Feel | ↔ | ↔ | ↔ |
| Transepidermal Water Loss | ↔ | ↓ | ↓ |
| Key: ↔ no change ↓ decrease ↑ increase | | | |

### Discussion

Gloss is considered to be the major parameter in the assessment of coat condition as it is the first and most striking impression given by the dog. In this study the mean increase in gloss observed in the zinc plus linoleic acid group approached half a unit on a 1 to 5 scale. This magnitude of improvement is one that is easily and reproducibly distinguished by the QDA panel and would be detected by dog owners.

The dramatic improvement in scale observed in the group of dogs that received the combination of zinc plus linoleic acid, which was not seen in the other groups, indicates there is a degree of synergism involved when the supplements are combined.

Zinc was shown to play a significant role in the reduction of transepidermal water loss in this study as well as in the previous phase I. These results are indicative that zinc is active in improving skin health by boosting the cutaneous barrier function and therefore reducing the risk of dry scaly skin. This may explain the effects of zinc in reducing skin scale.

The results from this study represent the first research able to show that supplementation of a complete and balanced professional dog food, with zinc and linoleic acid concentrations in excess of those required to prevent deficiency, can make significant and substantial enhancements in the skin and coat condition of animals.

### Conclusions

The rationale and the protocols used in this study have shown to be a valid and effective method for assessing the effect of nutrients on skin and coat condition. This method can now be extended with the confident knowledge that nutrients which play a part in improving skin and coat condition can be identified by this protocol.
Zinc and linoleic acid have been identified in this study as ingredients involved in the promotion of superior skin and coat condition when provided in addition to an already balanced premium quality animal food.

### Example 1a

A trial was conducted, as set out in Example 1, using a zinc concentration of 25 mg/400 kcal and a linoleic acid concentration of 6 g/400 kcal in a complete and balanced diet.

These levels of zinc and linoleic acid also showed the promotion of superior skin and coat condition to already healthy animals.

### Example 2

### THE EFFECT OF DIETARY SUPPLEMENTATION OF MARINE FISH OILS ON BLOOD COAGULATION PARAMETERS OF ADULT DOGS

### Introduction

◆ This trial was carried out to test the safety of supplementing animal diets with relatively high amounts of marine fish oils (MFO). Marine fish oils, containing Eicosapentanoic acid (EPA) and Docosahexanoic acid (DHA) in particular, have been found to have an anti-inflammatory effect in humans and animals. They have also been shown to increase blood coagulation times at very high levels, which is an unacceptable adverse effect. In order to exploit the anti-inflammatory effects of these fatty acids in animals, particularly dogs, it was necessary to test their safety. This was done by feeding double the amount of MFO that would have to be fed for an anti-inflammatory effect over a six month period. During this time blood samples are taken to monitor coagulation function.

### Material and Methods

◆ Six yellow coated Labradors retrievers were put on a six month diet of the previously described complete balanced diet with 4.67 g/400 kcal MFO inclusion. This corresponds to 489 mg/400 kcal EPA and 356 mg/400 kcal DHA in the finished product. The animals were fed to body weight maintenance.
◆ Before feeding the diet, blood samples were collected for coagulation tests to establish a baseline. This was done at 21, 14 and 1 day before the start of diet. Subsequently, blood samples were taken every 4 weeks for coagulation tests.
◆ The coagulation parameters that were measured were platelet count (platC), prothrombin time (prothrT), partial thromboplastin time (ptT) and fibrinogen (F). ProthrT and ptT are dynamic measurements of changes in coagulation times that would be expected to be influenced by the MFO in the diet.

### Results

◆ No adverse clinical events were reported and no abnormalities were found in any animal on veterinary examination.
◆ The mean results (± standard error) for the 6 animals are shown in Table 4 for the four coagulation parameters

**Table 4**

| **week** | **platelet** **count** (10⁹/1) | **prothrombin** **time** (seconds) | **thromboplastin** **time** (seconds) | **fibrinogen** (g/1) |
|---|---|---|---|---|
| **- 3** | 290±32 | 9.0±0.2 | 15.9±0.7 | 1.4±0.2 |
| **- 2** | 277±27 | 9.0±0.1 | 13.8±0.3 | 1.8±0.2 |
| **0** | 283 ±25 | 9.3±0.3 | 12.3 ±0.3 | 1.5±0.2 |
| **4** | 293±25 | 9.3±0.3 | 11.3±0.4 | 1.3±0.2 |
| **8** | 273±24 | 9.1±0.4 | 14.0±0.8 | 1.8±0.3 |
| **12** | 300±26 | 10.3±0.2 | 18.7±0.5 | 1.1±0.1 |
| **16** | 261±27 | 8.2±0.1 | 13.6±0.4 | 1.0±0 |
| **20** | 268±44 | 8.7±0.1 | 12.3±0.8 | 1.3±0.1 |
| **24** | 268±30 | 9.3±0.2 | 14.3±0.5 | 1.8±0.1 |
| | | | | |
| **Normal range** | 150 - 450 | 6 - 11 | 10 - 20 | 1.0 - 4.0 |

◆ At no time were any of the parameters from any individual dog out of the normal ranges.
◆ There was no perceivable increase in halitosis or coat malodour specifically of a fishy nature.

### Conclusions

◆ As the purpose of this trial was to assess the safety of longterm feeding of MFO at relatively high inclusion levels, it is important to note that none of the animals were taken off trial because of health reasons. Furthermore, none of the mean values of the parameters increased or decreased to outside their normal range.
◆ No adverse effects on clotting function were found as a result of longterm feeding of a diet containing amounts of MFO in excess of double those required for anti-inflammatory effects.
◆ There was no perceivable increase in halitosis or coat odour as a result of the inclusion of MFO in the diet.

### Recommendations

◆ MFO can be used in our diets at the levels according to the invention without adverse effects.

## Claims

1. A diet or foodstuff comprising:
(a) zinc at a concentration of above 28 mg/400 kcal and linoleic acid at a concentration of 4 g/400 kcal, or above; or
(b) zinc at a concentration of 20 mg/400 kcal or above and linoleic acid at a concentration of 6 g/400 kcal or above.

2. A diet or foodstuff, as claimed in claim 1, alternative (a), wherein the zinc concentration is 35 mg/400 kcal or above, preferably 40 mg/400 kcal or above.

3. A diet or foodstuff, as claimed in claim 1, alternative (a) or claim 2 wherein the linoleic acid concentration is 5 g/400 kcal or above, preferably 6 g/400 kcal or above.

4. A diet or foodstuff, as claimed in claim 1, alternative (b), wherein the zinc concentration is 25 mg/400 kcal or above, preferably 30 mg/400 kcal or above, more preferably 35 mg/400 kcal or above most preferably 40 mg/400 kcal or above.

5. A diet or foodstuff, as claimed in claim 1, alternative (b) or claim 4, wherein the linoleic acid concentration is 7 g/400 kcal or above, preferably 8 g/400 kcal or above.

6. A diet or foodstuff, as claimed in any one of claims 1 to 5, which is for a dog, cat, horse or human.

7. A diet or foodstuff, as claimed in any one of claims 1 to 6, further including eicosapentaenoic acid at a concentration of from 250-500 mg/400 kcal.

8. A diet or foodstuff, as claimed in any one of claims 1 to 7, further including docosahexanioic acid at a concentration of from 175-400 mg/400 kcal.

9. A dietary supplement, which, in addition to other nutrient intake, supplies: (a) a total zinc intake at a concentration of above 28 mg/400 kcal and a total intake of linoleic acid at a concentration of 4 g/400 kcal or above; or (b) a total zinc intake at a concentration of 20 mg/400 kcal or above and linoleic acid at a concentration of 6 g/400 kcal or above.

10. A supplement, as claimed in claim 9, alternative (a), wherein the total zinc intake is 35 mg/400 kcal or above, preferably 40 mg/400 kcal or above.

11. A supplement, as claimed in claim 9, alternative (a) or claim 10, wherein the total linoleic acid intake is 5 g/400 kcal or above, preferably 6 g/400 kcal or above.

12. A supplement, as claimed in claim 9, alternative (b), wherein the total zinc intake is 25 mg/400 kcal or above, preferably 30 mg/400 kcal or above, more preferably 35 mg/400 kcal or above, most preferably 40 mg/400 kcal or above.

13. A supplement, as claimed in claim 9, alternative (b) or claim 12, wherein the total linoleic acid intake is 7 g/400 kcal or above, preferably 8 g/400 kcal or above.

14. A supplement, as claimed in any one of claims 9 to 13 which is for a dog, cat, horse or human.

15. A supplement, as claimed in any one of claims 9 to 14 which, in addition to other nutrient intake, supplies a total eicosapentaenoic acid concentration of from 250-500 mg/400 kcal.

16. A supplement, as claimed in any one of claims 9 to 15 which, in addition to other nutrient intake, supplies a total docosahexanoic acid concentration of from 175-400 mg/400 kcal.

17. A supplement, as claimed in any one of claims 9 to 16, which is in liquid or solid form, preferably in powder form.

18. A diet or foodstuff or supplement as claimed in any one of claims 1 to 17, wherein the zinc is in the form of zinc sulphate, zinc oxide or organic zinc complexes or a combination of two or more thereof.

19. A diet, foodstuff or supplement as claimed in any one of claims 1 to 18, wherein the linoleic acid is provided as safflower oil, sunflower oil, soyabean oil or a combination of two or more thereof.

20. A diet, foodstuff or supplement as claimed in any one of claims 1 to 19 for use in enhancing and/or improving the skin and coat condition of an animal.

21. A process for the preparation of a diet, foodstuff or supplement, as claimed in any one of claims 1 to 19, comprising mixing together the ingredients, optionally heating to cook any raw food ingredients and presenting the mixture in a form suitable for consumption or administration.

22. The non-therapeutic use of a diet, foodstuff or supplement, as claimed in any one of claims 1 to 19, for enhancing and/or improving the skin and coat condition of an animal with healthy skin and coat conditions.

23. The use, as claimed in claim 22, wherein the animal is a dog, cat, horse or human.

24. The use of a diet, foodstuff or supplement, as claimed in any one of claims 1 to 19, in the manufacture of a medicament for enhancing and/or improving the skin and coat condition of an animal with dry scaly skin.

25. The use, as claimed in claim 24, wherein the animal is a dog, cat, horse or human.

## Patentansprüche

1. Nahrungsmittel oder Futtermittel, welches umfasst:
(a) Zink in einer Konzentration von über 28 mg/400 kcal und Linolsäure in einer Konzentration von 4 g/400 kcal oder darüber; oder
(b) Zink in einer Konzentration von 20 mg/400 kcal oder darüber und Linolsäure in einer Konzentration von 6 g/400 kcal oder darüber.

2. Nahrungsmittel oder Futtermittel nach Anspruch 1, Alternative (a), **dadurch gekennzeichnet, daß** die Zink-Konzentration 35 mg/400 kcal oder darüber beträgt, vorzugsweise 40 mg/400 kcal oder darüber.

3. Nahrungsmittel oder Futtermittel nach Anspruch 1, Alternative (a) oder Anspruch 2, **dadurch gekennzeichnet, daß** die Linolsäure-Konzentration 5 g/400 kcal oder darüber beträgt, vorzugsweise 6 g/400 kcal oder darüber.

4. Nahrungsmittel oder Futtermittel nach Anspruch 1, Alternative (b), **dadurch gekennzeichnet, daß** die Zink-Konzentration 25 mg/400 kcal oder darüber beträgt, vorzugsweise 30 mg/400 kcal oder darüber, bevorzugter 35 mg/400 kcal oder darüber, am bevorzugtesten 40 mg/400 kcal oder darüber.

5. Nahrungsmittel oder Futtermittel nach Anspruch 1, Alternative (b), oder Anspruch 4, **dadurch gekennzeichnet, daß** die Linolsäure-Konzentration 7 g/400 kcal oder darüber beträgt, vorzugsweise 8 g/440 kcal oder darüber.

6. Nahrungsmittel oder Futtermittel nach einem der Ansprüche 1 bis 5, das für einen Hund, eine Katze, ein Pferd oder einen Menschen ist.

7. Nahrungsmittel oder Futtermittel nach einem der Ansprüche 1 bis 6, **dadurch gekennzeichnet, daß** es weiter Eicosapentaensäure in einer Konzentration von 250-500 mg/400 kcal einschließt,

8. Nahrungsmittel oder Futtermittel nach einem der Ansprüche 1 bis 7, **dadurch gekennzeichnet, daß** es weiter Docosahexansäure in einer Konzentration von 175-400 mg/400 kcal einschließt.

9. Nahrungsergänzungsstoff, der, zusätzlich zu weiterer Nährstoffaufnahme: (a) eine Gesamtzinkaufnahme in einer Konzentration, von über 28 mg/400 kcal und eine gesamte Aufnahme an Linolsäure in einer Konzentration von 4 g/400 kcal oder darüber; oder (b) eine gesamte Zinkaufnahme in einer Konzentration von 20 mg/400 kcal oder darüber und Linolsäure in einer Konzentration von 6 g/400 kcal oder darüber bereitstellt.

10. Ergänzungsstoff nach Anspruch 9, Alternative (a), **dadurch gekennzeichnet, daß** die Gesamtzinkaufnahme 35 mg/400 kcal oder darüber beträgt, vorzugsweise 40 mg/400 kcal oder darüber.

11. Ergänzungsstoff nach Anspruch 9, Alternative (a), oder Anspruch 10, **dadurch gekennzeichnet, daß** die Gesamtlinolsäureaufnahme 5 g/400 kcal oder darüber beträgt, vorzugsweise 6 g/400 kcal oder darüber.

12. Ergänzungsstoff nach Anspruch 9, Alternative (b), **dadurch gekennzeichnet, daß** die Gesamtzinkaufnahme 25 mg/400 kcal oder darüber beträgt, vorzugsweise 30 mg/400 kcal oder darüber, bevorzugter 35 mg/400 kcal oder darüber, am bevorzugtesten 40 mg/400 kcal oder darüber.

13. Ergänzungsstoff nach Anspruch 9, Alternative (b), oder Anspruch 12, **dadurch gekennzeichnet, daß** die Gesamtlinolsäureaufnahme 7 g/400 kcal oder darüber beträgt, vorzugsweise 8 g/400 kcal oder darüber.

14. Ergänzungsstoff nach einem der Ansprüche 9 bis 13, der für einen Hund, eine Katze, ein Pferd oder einen Menschen ist.

15. Ergänzungsstoff nach einem der Ansprüche 9 bis 14, **dadurch gekennzeichnet, daß** er, zusätzlich zu weiterer Nährstoffaufnahme, eine Gesamteicosapentaensäure-Konzentration von 250 bis 500 mg/400 kcal bereitstellt.

16. Ergänzungsstoff nach einem der Ansprüche 9 bis 15, **dadurch gekennzeichnet, daß** er, zusätzlich zu weiterer Nährstoffaufnahme, eine Gesamtdocosahexansäure-Konzentration von 175-400 mg/400 kcal bereitstellt.

17. Ergänzungsstoff nach einem der Ansprüche 9 bis 16, **dadurch gekennzeichnet, daß** er in flüssiger oder fester Form, vorzugsweise in Pulverform vorliegt.

18. Nahrungsmittel oder Futtermittel oder Ergänzungsstoff nach einem der Ansprüche 1 bis 17, **dadurch gekennzeichnet, daß** das Zink in der Form von Zinksulfat, Zinkoxid oder organischen Zink-Komplexen oder einer Kombination von zwei oder mehr davon vorliegt.

19. Nahrungsmittel, Futtermittel oder Ergänzungsstoff nach einem der Ansprüche 1 bis 18, **dadurch gekennzeichnet, daß** die Linolsäure bereitgestellt wird als Safloröl, Sonnenblumenöl, Sojabohnenöl oder eine Kombination von zwei oder mehr davon.

20. Nahrungsmittel, Futtermittel oder Ergänzungsstoff nach einem der Ansprüche 1 bis 19 zur Verwendung bei der Verstärkung und/oder Verbesserung des Haut- und Fellzustandes eines Tieres.

21. Verfahren zur Herstellung eines Nahrungsmittels, Futtermittels oder Ergänzungsstoffes nach einem der Ansprüche 1 bis 19, welches umfasst, daß die Inhaltsstoffe zusammengemischt werden, fakultativ gekocht werden, um alle roben Nahrungsinhaltsstoffe zu garen, und die Mischung in einer für den Verzehr oder die Verabreichung geeigneten Form präsentiert wird.

22. Nicht-therapeutische Verwendung eines Nahrungsmittels, Futtermittels oder Ergänzungsstoffes nach einem der Ansprüche 1 bis 19 zur Verstärkung und/oder Verbesserung des Haut- und Fellzustandes eines Tieres mit gesunden Haut- und Fellzuständen.

23. Verwendung nach Anspruch 22, **dadurch gekennzeichnet, daß** das Tier ein Hund, eine Katze, ein Pferd oder ein Mensch ist.

24. Verwendung eines Nahrungsmittels, Futtermittels oder Ergänzungsstoffes nach einem der Ansprüche 1 bis 19 zur Herstellung eines Arzneimittels zur Verstärkung und/oder Verbesserung des Haut- und Fellzustandes eines Tieres mit trockener schuppiger Haut.

25. Verwendung nach Anspruch 24, **dadurch gekennzeichnet, daß** das Tier ein Hund, eine Katze, ein Pferd oder ein Mensch ist.

## Revendications

1. Régime ou aliment comprenant :
(a) du zinc à une concentration supérieure à 28 mg/400 kcal et de l'acide linoléique à une concentration de 4 g/400 kcal ou supérieure ; ou
(b) du zinc à une concentration de 20 mg/400 kcal ou supérieure et de l'acide linoléique à une concentration de 6 g/400 kcal ou supérieure.

2. Régime ou aliment, selon la revendication 1, proposition (a), dans lesquels la concentration en zinc est égale à 35 mg/400 kcal ou supérieure, de préférence égale à 40 mg/400 kcal ou supérieure.

3. Régime ou aliment, selon la revendication 1, proposition (a) ou selon la revendication 2, dans lesquels la concentration en acide linoléique est égale à 5 g/400 kcal ou supérieure, de préférence égale à 6 g/400 kcal ou supérieure.

4. Régime ou aliment, selon la revendication 1, proposition (b), dans lesquels la concentration en zinc est égale à 25 mg/400 kcal ou supérieure, de préférence égale à 30 mg/400 kcal ou supérieure, plus préférablement égale à 35 mg/400 kcal ou supérieure et de manière la plus préférée égale à 40 mg/400 kcal ou supérieure.

5. Régime ou aliment, selon la revendication 1, proposition (b) ou selon la revendication 4, dans lesquels la concentration en acide linoléique est égale à 7 g/400 kcal ou supérieure, de préférence égale à 8 g/400 kcal ou supérieure.

6. Régime ou aliment, selon l'une quelconque des revendications 1 à 5, qui sont destinés à un chien, un chat, un cheval ou un être humain.

7. Régime ou aliment, selon l'une quelconque des revendications 1 à 6, comprenant en outre de l'acide éicosapentaénoïque à une concentration comprise dans l'intervalle de 250 à 500 mg/400 kcal.

8. Régime ou aliment, selon l'une quelconque des revendications 1 à 7, comprenant en outre de l'acide docosahexanioïque à une concentration comprise dans l'intervalle de 175 à 400 mg/400 kcal.

9. Supplément diététique, qui, en plus de l'apport des autres nutriments, fournit : (a) un apport total en zinc à une concentration supérieure à 28 mg/400 kcal et un apport total en acide linoléique à une concentration de 4 g/400 kcal ou supérieure; ou (b) un apport total en zinc à une concentration de 20 mg/400 kcal ou supérieure et un apport total en acide linoléique à une concentration de 6 g/400 kcal ou supérieure.

10. Supplément selon la revendication 9, proposition (a), dans lequel l'apport total en zinc est égal à 35 mg/400 kcal ou supérieur, de préférence égal à 40 mg/400 kcal ou supérieur.

11. Supplément selon la revendication 9, proposition (a) ou selon la revendication 10, dans lequel l'apport total en acide linoléique est égal à 5 g/400 kcal ou supérieur, de préférence égal à 6 g/400 kcal ou supérieur.

12. Supplément selon la revendication 9, proposition (b), dans lequel l'apport total en zinc est égal à 25 mg/400 kcal ou supérieur, de préférence égal à 30 mg/400 kcal ou supérieur, plus préférablement égal à 35 mg/400 kcal ou supérieur et de manière la plus préférée égal à 40 mg/400 kcal ou supérieur.

13. Supplément selon la revendication 9, proposition (b) ou selon la revendication 12, dans lequel l'apport total en acide linoléique est égal à 7 g/400 kcal ou supérieur, de préférence égal à 8 g/400 kcal ou supérieur.

14. Supplément selon l'une quelconque des revendications 9 à 13, qui est destiné à un chien, un chat, un cheval ou un être humain.

15. Supplément selon l'une quelconque des revendications 9 à 14, qui, en plus de l'apport des autres nutriments, comprend une concentration totale en acide éicosapentaénoïque comprise dans l'intervalle de 250 à 500 mg/400 kcal.

16. Supplément selon l'une quelconque des revendications 9 à 15, qui, en plus de l'apport des autres nutriments, fournit une concentration totale de l'acide doeasahexanioïque comprise dans l'intervalle de 175 à 400 mg/400 kcal.

17. Supplément selon l'une quelconque des revendications 9 à 16, qui se présente sous une forme liquide ou solide, de préférence sous la forme d'une poudre.

18. Régime, aliment ou supplément selon l'une quelconque des revendications 1 à 17, dans lesquels le zinc se présente sous la forme de complexes de sulfate de zinc, d'oxyde de zinc ou de zinc organique ou d'une composition de deux de ces complexes ou plus.

19. Régime, aliment ou supplément selon l'une quelconque des revendications 1 à 18, dans lesquels l'acide linoléique est fourni sous la forme d'une huile de carthame, d'une huile de tournesol ou d'une huile de soja ou d'une composition de deux de ces huiles ou plus.

20. Régime, aliment ou supplément selon l'une quelconque des revendications 1 à 19, pour l'utilisation dans l'augmentation et/ou l'amélioration de l'état de la peau et du pelage d'un animal.

21. Procédé pour la préparation d'un régime, d'un aliment ou d'un supplément selon l'une quelconque des revendications 1 à 19, comprenant l'étape consistant à mélanger les ingrédients, optionnellement l'étape consistant à chauffer afin de cuire tout ingrédient de Régime crue et l'étape consistant à présenter le mélange sous une forme adéquate pour la consommation ou l'administration.

22. Utilisation non thérapeutique d'un régime, d'un aliment ou d'un supplément selon l'une quelconque des revendications 1 à 19, pour augmenter et/ou améliorer l'état de la peau et du pelage d'un animal présentant des conditions de peau et de pelage sains.

23. Utilisation selon la revendication 22, dans laquelle l'animal est un chien, un chat, un cheval ou un être humain.

24. Utilisation d'un régime, d'un aliment ou d'un supplément selon l'une quelconque des revendications 1 à 19, dans la fabrication d'un médicament destiné à augmenter et/ou améliorer l'état de la peau et du pelage d'un animal ayant une peau squameuse et sèche.

25. Utilisation selon la revendication 24, dans laquelle l'animal est un chien, un chat, un cheval ou un être humain.
